# EUROPÄISCHE PATENTSCHRIFT

(11) **EP 1 004 214 B1**
(45) Veröffentlichungstag und Bekanntmachung des Hinweises auf die Patenterteilung: **17.05.2006**
(21) Anmeldenummer: 98948698.0
(22) Anmeldetag: 31.07.1998
(51) Int. Cl.: H04Q 7/32

(54) **VERFAHREN, MOBILSTATION UND KOMMUNIKATIONSSYSTEM ZUM ANPASSEN AN EIN VON EINEM MOBILFUNKNETZ UNTERSTÜTZTES LUFTSCHNITTSTELLENZUGANGSVERFAHREN**
METHOD, MOBILE STATION AND TELECOMMUNICATION SYSTEM FOR GENERATING AN ADAPTATION TO A PROCESS FOR ACCESSING A RADIO INTERFACE SUPPORTED BY A MOBILE RADIOTELEPHONE NETWORK
PROCEDE, STATION MOBILE ET SYSTEME DE TELECOMMUNICATION POUR GENERER UNE ADAPTATION A UN PROCEDE D'ACCES A UNE INTERFACE RADIO SUPPORTEE PAR UN RESEAU RADIOTELEPHONIQUE MOBILE

(30) Priorität: 12.08.1997 DE 19734933
(43) Veröffentlichungstag der Anmeldung: 31.05.2000
(73) Patentinhaber: SIEMENS AKTIENGESELLSCHAFT, 80333 München (DE)
(72) Erfinder: FÄRBER, Michael, D-82515 Wolfratshausen (DE)
(86) Internationale Anmeldenummer: PCT/DE1998/002192
(87) Internationale Veröffentlichungsnummer: WO 1999/008391

(56) Entgegenhaltungen:
- WO-A-95/23487
- WO-A-97/16938
- GB-A- 2 294 844

## Beschreibung

Die Erfindung betrifft ein Verfahren, eine Mobilstation und ein Kommunikationssystem zum Anpassen an ein von einem Mobilfunknetz unterstütztes Luftschnittstellenzugangsverfahren.

In den Mobilfunksystemen der dritten Generation, wie beispielsweise UMTS (Universal Mobile Telecommunication System), werden voraussichtlich unterschiedliche Luftschnittstellentechnologien für die Funkübertragung zwischen den Basisstationen eines Mobilfunknetzes und Mobilstationen zum Einsatz kommen. Unterschiedliche Luftschnittstellentechnologien bedeuten jedoch auch unterschiedliche Luftschnittstellenzugangsverfahren. In dem Dokument "Tdoc SMG2 UMTS 52/97", ETSI STC SMG2 UMTS adhoc vom 8 - 10 April 1997 in Lulea, Schweden, Seite 1 und 2, wird der Einsatz eines globalen Pilotkanals auf einer weltweit einheitlichen Frequenz bzw. in einem weltweit einheitlichen Frequenzspektrum vorgeschlagen, um einem mobilen Teilnehmer die Möglichkeit eines weltweiten Zugangs zu jedem lokalen Mobilfunknetz zu ermöglichen. Auf diesem Pilotkanal werden Informationen an die Mobilstationen übertragen, durch die sich die Mobilstationen an das Luftschnittstellenzugangsverfahren eines lokalen Mobilfunknetzes anpassen können. Eine für diese Anpassungsmöglichkeit geeignete Mobilstation muß multimode-fähig sein, d.h. alle für die Anpassung an die Zugangsverfahren benötigten Komponenten sind in der Mobilstation verwirklicht und die auf dem Pilotkanal übertragenen Informationen dienen lediglich dem Schalten zwischen den jeweiligen für das Zugangsverfahren zu verwendenden Komponenten.

Dieses Verfahren besitzt den Nachteil, daß eine Frequenz bzw. ein Frequenzspektrum für den Pilotkanal weltweit reserviert werden muß. Aufgrund der nur begrenzt verfügbaren Funkfrequenzen wird dieser Pilotkanal sehr einfach und mit einer begrenzten Übertragungskapazität ausgelegt sein, um ihn in allen Mobilfunksystemen nutzen zu können. Eine geringe Übertragungskapazität würde jedoch den ausschließlichen Einsatz der oben beschriebenen Multimode-Mobilstationen bedingen.

Aus J. Mitoia, "Software Radio Technology Challenges and Opportunities First European Workshop on Software Radios", Software Radio Workschop, 29 May 1997, Brussels, Seite 2 und 3, ist bekannt, daß Mobilstationen durch Programmodule an unterschiedliche Luftschnittstellentechnologien angepaßt werden können. Dabei erfolgt eine Anpassung beispielsweise an ein Vielfachzugriffsverfahren (FDMA, TDMA, CDMA oder Hybride), an eine Luftschnittstelle (Kanalkodierung, Fehlerprotokolle etc.) oder an ein Modulationsverfahren.

Die Möglichkeit der Verwendung von Mobilstationen, die durch von den Basisstationen herunterladbare Programmodule ein Luftschnittstellenzugangsverfahren implementieren, wäre bei der Verwendung des oben beschriebenen Pilotkanals ausgeschlossen, da die Übertragungskapazität für eine Übertragung von insbesondere größeren Programmodulen nicht ausreichend ware.

Aus der GB 2 294 844 A ist ein Kommunikationssystem bekannt, bei dem mehrere Kommunikationssysteme mittels eines zentralen Verbindungssystems verbunden sind. Einer Teilnehmerstation wird nach einer Anfrage von einem gemeinsamen Kommunikationssystem eine Liste der verfügbaren Kommunikationssysteme und deren spezifischen Eigenschaften übermittelt. Nach der Auswahl eines geeigneten Kommunikationssystems durch die Teilnehmerstation wird ein entsprechendes Programm von dem gemeinsamen Kommunikationssystem zu der Teilnehmerstation gesendet. Mittels dieses Programms führt die Teilnehmerstation nachfolgend eine Konfiguration auf das ausgewählte Kommunikationssystem durch.

Der Erfindung liegt die Aufgabe zugrunde, ein Verfahren, eine Mobilstation sowie ein Kommunikationssystem zu realisieren, die die oben genannten Nachteile hinsichtlich der beschränkten Übertragungskapazität des Pilotkanals umgehen.

Die Aufgabe wird gemäß der Erfindung durch das Verfahren nach den Merkmalen des Patentanspruchs 1, die Mobilstation nach den Merkmalen des Patentanspruchs 15 und das Kommunikationssystem nach den Merkmalen des Patentanspruchs 21 gelöst. Demnach generiert eine Mobilstation, die sich in einem Funkversorgungsbereich eines Mobilfunknetzes befindet, eine Anpassung an ein von diesem Mobilfunknetz unterstütztes Luftschnittstellenzugangsverfahren. Das Verfahren beinhaltet, daß ein Pilotkanal von zumindest einer Rundfunksendestation eines öffentlichen Rundfunksystems in dem Funkversorgungsbereich des Mobilfunknetzes gesendet und von der Mobilstation empfangen wird. Auf dem Pilotkanal werden Signalisierungsinformationen über zumindest ein von dem Mobilfunknetz unterstützten Luftschnittstellenzugangsverfahren übertragen. Die Mobilstation wertet diese Signalisierungsinformationen aus, wählt ein Luftschnittstellenzugangsverfahren aus und generiert eine Anpassung an das ausgewählte Luftschnittstellenzugangsverfahren.

In einer Ausgestaltung der Erfindung wird der Pilotkanal gemeinsam mit RDS-Informationen, vorzugsweise periodisch, auf zumindest einem Rundfunkübertragungskanal in einem Frequenzspektrum eines öffentlichen Rundfunksystems in dem Gebiet der funktechnischen Abdeckung durch das Mobilfunknetz gesendet.

Dabei wird der Pilotkanalempfänger in der Mobilstation in einer weiteren Ausgestaltung als FM-Empfänger mit einem darin verwirklichten RDS-Dekoder ausgestaltet, um einen RDS-Informationen führenden Rundfunkübertragungskanal in dem Frequenzspektrum des öffentlichen Rundfunksystems zu ermitteln und den Pilotkanal zu empfangen.

Die Nutzung der Infrastruktur des öffentlichen Rundfunksystems besitzt den Vorteil, daß das Frequenzspektrum für die öffentlichen Rundfunksysteme weltweit nahezu identisch ist (beispielsweise 87,5 - 108 MHz) und die Übertragung der RDS-Informationen nach einem standardisierten Verfahren abläuft. Desweiteren trägt die bereits vorhandene weltweite Infrastruktur der Rundfunksysteme mit einer nahezu vollständigen Abdeckung der terrestrischen Gebiete ebenso wie die preiswerte und in hochintegrierter Form erhältliche FM-Empfängertechnologie zu einer einfachen und kostengünstigen Realisierung der Erfindung bei. Eine Integration der FM-Empfängertechnologie bedeutet weder einen zusätzlichen signifikanten Kostenanteil noch eine höhere Komplexität für die Mobilstation.

In einer weiteren Ausgestaltung der Erfindung wird mittels eines auf dem Pilotkanal übertragenen Zeigers auf zumindest einen Breitbandübertragungskanal mit einer hohen Übertragungskapazität verwiesen.

Auf den Breitbandübertragungskanal wird zumindest ein Programmodul für eine programmgemäße Anpassung der Mobilstation an das ausgewählte Luftschnittstellenzugangsverfahren, vorzugsweise periodisch, übertragen.

Eine in der Mobilstation verwirklichte Adaptationseinrichtung generiert durch die Programmodule eine Anpassung der Mobilstation an das ausgewählte Luftschnittstellenzugangsverfahren.

Der Breitbandübertragungskanal wird vorzugsweise in einem Frequenzspektrum eines digitalen Rundfunksystems von zumindest einer digitalen Rundfunksendestation in dem Funkversorgungsbereich des Mobilfunknetzes gesendet.

Ein auf das Frequenzspektrum des digitalen Rundfunksystems ausgelegter digitaler Breitbandempfänger in der Mobilstation ermittelt den durch den Zeiger ausgewiesenen Breitbandübertragungskanal und empfängt die Programmodule. Diese Ausgestaltung besitzt den Vorteil, daß die Technologie des digitalen Breitbandempfängers, gleich der des FM-Empfängers, in hochintegrierter Form und zu einem niedrigem Preis verfügbar ist. Gleichsam bietet das digitale Rundfunksystem eine nahezu weltweite Abdeckung gepaart mit einer hohen Übertragungskapazität, die weit höher als die Kapazität eines Übertragungskanals eines Mobilfunknetzes ist.

Vorteilhaft wirkt sich bei dieser beschriebenen Ausgestaltungen der Erfindung aus, daß der Pilotkanal mit den Signalisierungsinformationen sehr schmalbandig ausgelegt werden kann, um der Mobilstation globale, für die Auswahl des Luftschnittstellenzugangsverfahrens relevante Signalisierungsinformationen des Mobilfunknetzes zur Verfügung zu stellen. Aufgrund dieser Signalisierungsinformationen kann eine multimode-fähige Mobilstation eine Anpassung an ein Luftschnittstellenzugangsverfahren generieren. Eine Mobilstation mit der Möglichkeit einer programmgemäßen Anpassung an ein Luftschnittstellenzugangsverfahren wird durch den Zeiger auf den Breitbandübertragungskanal verwiesen, auf dem die Programmodule gesendet werden. Diese Ausgestaltung ermöglicht den Einsatz unterschiedlicher Mobilstationstypen.

Weiterhin können die Programmodule in einer weiteren Ausgestaltung der Erfindung in zumindest einem Datenpaket auf dem Breitbandübertragungskanal übertragen werden. Die Mobilstation kann für diesen Fall einen Datenpaketspeicher enthalten, in dem die empfangenen Datenpakete gespeichert werden. Bei Vor- bzw. Nachstellen eines Kopfes bzw. einer Rahmen-Check-Summe für jedes Datenpaket kann in der Auswerteeinrichtung der Mobilstation der vollständige Empfang aller für die Anpassung an das ausgewählte Luftschnittstellenzugangsverfahren benötigter Datenpakete überprüft werden. Vorteilhaft wirkt sich bei dieser Ausgestaltung aus, daß die Mobilstation jederzeit mit dem Empfang der periodisch auf dem Breitbandübertragungskanal übertragenen Datenpakete beginnen kann, um nach vollständigen Empfang die Anpassung an das ausgewählten Luftschnittstellenzugangsverfahrens zu generieren.

Die nachfolgende Beschreibung mehrerer Ausführungsbeispiele des erfindungsgemäßen Verfahrens, der erfindungsgemäßen Mobilstation und des erfindungsgemäßen Kommunikationssystems besitzt lediglich beispielhaften Charakter. Die beschriebenen Merkmale sind nicht zwingend in der dargestellten Art zur Verwirklichung des angestrebten Erfolges erforderlich.

Ausführungsbeispiele der Erfindung werden anhand der beigefügten Zeichnung erläutert.

Es zeigen:
- FIG 1: einen Teil eines Kommunikationssystems, bei dem eine Mobilstation von einer Rundfunksendestation eines öffentlichen Rundfunksystems auf einem Pilotkanal übertragene Signalisierungsinformationen empfängt,
- FIG 2: ein Kommunikationssystem wie in FIG 1, bei dem die Mobilstation einen Rundfunkübertragungskanal von einer Rundfunksendestation eines öffentlichen Rundfunksystems sowie einen Breitbandübertragungskanal von einer digitalen Rundfunksendestation eines digitalen Rundfunksystems empfängt,
- FIG 3: den Aufbau eines Datenpaketes mit einem Kopf und einer Rahmen-Check-Summe und den Aufbau eines RDS-Rahmens mit RDS-Informationen und einem Pilotkanal, und
- FIG 4: eine Mobilstation mit darin verwirklichten Komponenten.

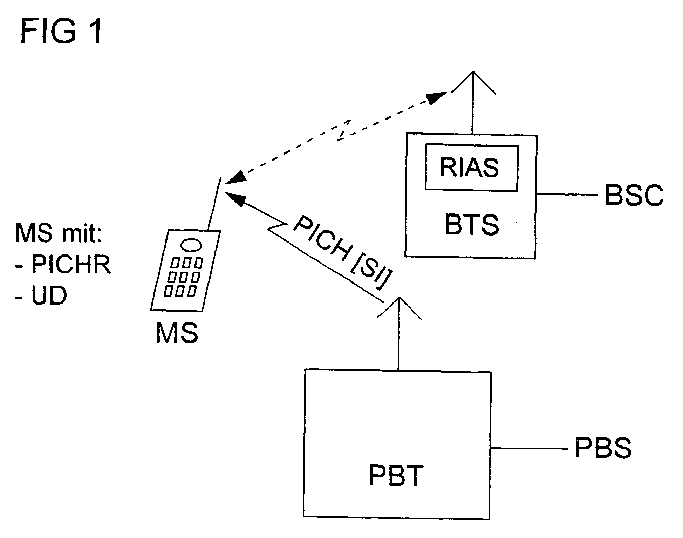

Der in der FIG 1 dargestellte Teil eines Kommunikationssystems weist eine Basisstation BTS auf, die zumindest ein für das zugehörige Mobilfunknetz gültiges Luftschnittstellenzugangsverfahren RIAS unterstützt. Die Basisstation BTS ist nach dem allgemein bekannten Stand der Technik mit weiteren Komponenten des Mobilfunknetzes, die für die Beschreibung der Erfindung nicht von Bedeutung sind, verbunden. Eine in dem Funkversorgungsbereich der Basisstation BTS bzw. des Mobilfunknetzes befindliche Mobilstation MS empfängt einen von einer Rundfunksendestation PBT eines öffentlichen Rundfunksystems PBS gesendeten Pilotkanal PICH. Zum Empfang dieses Pilotkanals PICH ist die Mobilstation MS mit einem auf die Frequenz des Pilotkanals PICH abgestimmten Pilotkanalempfänger PICHR ausgestattet. Auf dem Pilotkanal PICH übertragene Signalisierungsinformationen SI über zumindest ein Luftschnittstellenzugangsverfahren RIAS des Mobilfunknetzes werden in einer in der Mobilstation MS verwirklichten Auswerteeinrichtung UD ausgewertet. Mittels der Signalisierungsinformationen SI wählt die Auswerteeinrichtung UD ein Luftschnittstellenzugangsverfahren RIAS aus und generiert eine Anpassung der Mobilstation MS an dieses Luftschnittstellenzugangsverfahren RIAS. Die Signalisierungsinformationen SI werden dem öffentlichen Rundfunksystem PBS beispielsweise von den Netzbetreibern des Mobilfunknetzes zur Verfügung gestellt.

Eine derart ausgestaltete Mobilstation MS ist beispielsweise eine multimode-fähige Mobilstation MS, in der Komponenten für unterschiedliche Luftschnittstellenzugangsverfahren RIAS integriert sind. Durch die Signalisierungsinformationen SI werden in der Auswerteeinrichtung UD die jeweiligen für das ausgewählte Luftschnittstellenzugangsverfahren RIAS zu verwendenden Komponenten ausgewählt. Die Luftschnittstellenzugangsverfahren RIAS können beispielsweise durch unterschiedliche Frequenzbereiche, Vielfachzugriffsverfahren (FDMA, TDMA, CDMA oder Hybride), Kanalkodierung, Fehlerprotokolle oder Modulationsverfahren gekennzeichnet sein.

Die Verbindung zwischen der Mobilstation MS und der Rundfunksendestation PBT ist so gestaltet, daß nur eine einseitige Kommunikation von der Rundfunksendestation PBT zu der Mobilstation MS durch das Senden des Pilotkanals PICH erfolgt, die übertragungstechnische Funktion der Mobilstation MS sich also auf den Empfang des Pilotkanals PICH beschränkt. Nach der Generierung der Anpassung der Mobilstation MS an das ausgewählte Luftschnittstellenzugangsverfahren RIAS kann die Mobilstation eine Verbindung mit der Basisstation BTS nach dem Luftschnittstellenzugangsverfahren RIAS aufbauen, auf der beispielsweise ein weiterer Austausch von Signalisierungen nach dem Protokoll des Mobilfunknetzes stattfindet.

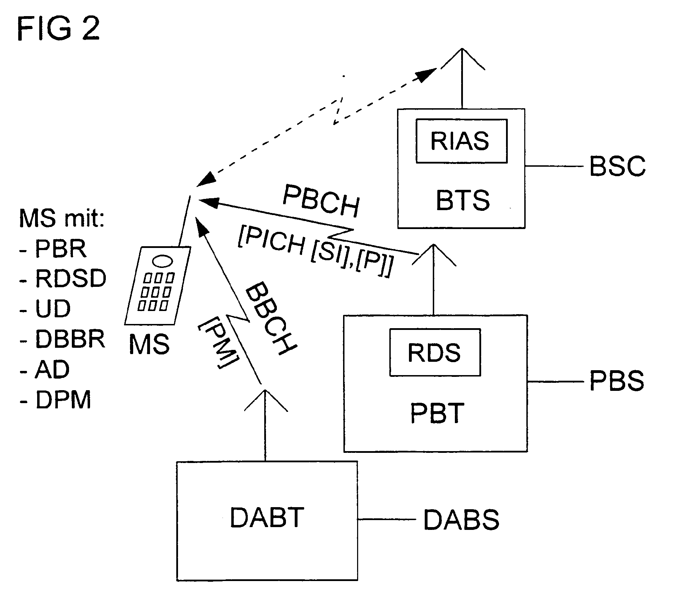

Die FIG 2 zeigt das in der FIG 1 dargestellte Kommunikationssystem mit einer zusätzlichen digitalen Rundfunksendestation DABT eines digitalen Rundfunksystems DABS.

In dieser Darstellung ist die Rundfunksendestation PBT mit Mitteln zum Übertragen von RDS-Informationen RDSI ausgestattet. Der Pilotkanal PICH wird gemeinsam mit den RDS-Informationen RDSI auf einem Rundfunkübertragungskanal PBCH gesendet. Zum Empfang des in dieser Weise gesendeten Pilotkanals PICH ist der Pilotkanalempfänger PICHR in der Mobilstation MS dabei als FM-Empfänger PBR mit einem darin verwirklichten RDS-Dekoder RDSD realisiert. Der FM-Empfänger PBR ermittelt in dem Frequenzspektrum des öffentlichen Rundfunksystems PBS (beispielsweis 87,5 - 108 MHZ) einen RDS-Informationen RDSI führenden Rundfunkübertragungskanal PBCH, auf dem, vorzugsweise periodisch, der Pilotkanal PICH mit den Signalisierungsinformationen SI übertragen wird. Die Auswerteeinrichtung UD in der Mobilstation MS wählt daraufhin, wie bereits zu der FIG 1 beschrieben, mittels der auf dem Pilotkanal PICH übertragenen Signalisierungsinformationen SI ein Luftschnittstellenzugangsverfahren RIAS aus und generiert eine Anpassung der Mobilstation MS an dieses ausgewählte Verfahren. Nach erfolgter Anpassung kann die Mobilstation MS eine Verbindung zum Austausch von Signalisierungen mit der Basisstation BTS aufbauen.

Auf dem Rundfunkübertragungskanal PBCH bzw. gemeinsam mit den RDS-Informationen RDSI wird neben dem Pilotkanal PICH auch ein Zeiger P übertragen. Dieser Zeiger P weist auf einen Breitbandübertragungskanal BBCH, auf dem zumindest ein Programmodul PM, vorzugsweise periodisch, übertragen wird. In einer Adaptationseinrichtung AD in der Mobilstation MS wird eine Anpassung an das ausgewählte Luftschnittstellenzugangsverfahren RIAS des Mobilfunksystems durch die Programmodule PM generiert. Als Adaptationseinrichtung AD wird beispielsweise ein Schaltungsmittel der digitalen Signalverarbeitung (DSP, FPGA etc.) genutzt. Der Breitbandübertragungskanal BBCH kann, wie dargestellt, von zumindest einer digitalen Rundfunksendestationen DABT in dem Frequenzspektrum eines digitalen Rundfunksystems DABS in dem Funkversorgungsbereich des Mobilfunksystems gesendet werden.

In der Mobilstation MS ist für den Empfang der Programmodule PM ein auf das Frequenzspektrum des digitalen Rundfunksystems DABS ausgelegter digitaler Breitbandempfänger DBBR verwirklicht, der den durch den Zeiger P ausgewiesenen Breitbandübertragungskanal BBCH ermittelt und die Programmodule PM empfängt.

Mit Hilfe dieser beschriebenen Ausgestaltung generiert auch eine nicht multimode-fähige, jedoch für eine programmgemäße Anpassung ausgelegte Mobilstation MS eine Anpassung an das ausgewählte Luftschnittstellenzugangsverfahren RIAS.

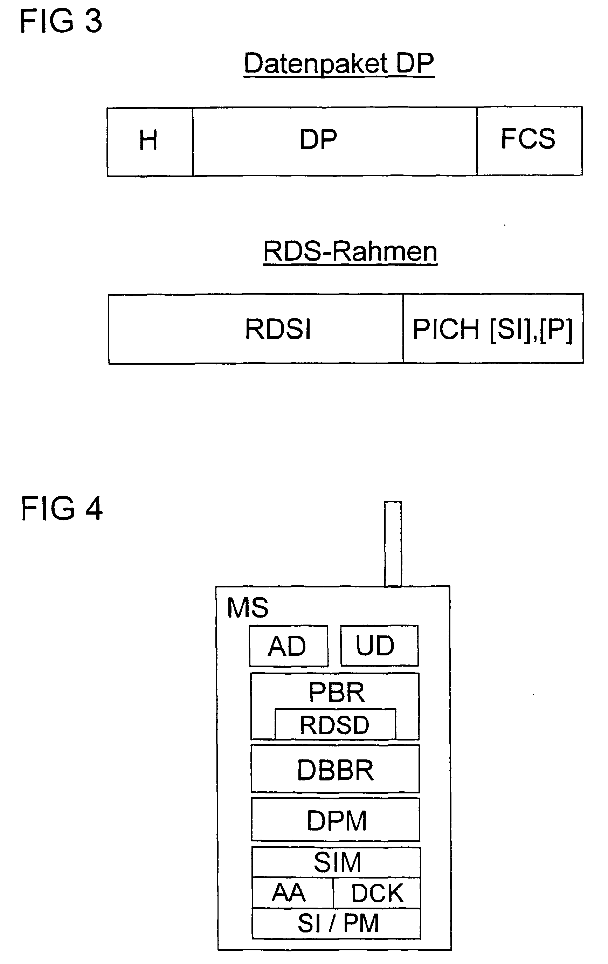

Die Programmodule können auch in Datenpaketen DP auf dem Breitbandübertragungskanal BBCH übertragen werden. Ein in der Mobilstation MS integrierter Datenpaketspeicher DPM speichert die empfangenen Datenpakete DP, die jeweils mit einem Kopf H und einer Rahmen-Check-Summe FCS versehen sind, so daß die Auswerteeinrichtung UD den erfolgreichen Empfang aller für die Generierung der Anpassung an das Luftschnittstellenzugangsverfahrens RIAS benötigter Datenpakete DP überprüft werden kann. Der allgemeine Aufbau eines derartigen Datenpaketes DP wird in der FIG 3 dargestellt. Dabei werden den Bits des Datenpakets DP jeweils mehrere Bits für den Kopf H und die Rahmen-Check-Summe FCS vor bzw. nachgestellt. In dieser Figur ist weiterhin der Aufbau eines RDS-Rahmens dargestellt. Dabei werden beispielsweise den Bits der RDS-Informationen RDSI zusätzliche Bits des Pilotkanals PI mit den Signalisierungsinformationen SI und dem Zeiger P angehängt.

Die FIG 4 zeigt eine Mobilstation MS mit den in vorhergehenden Figuren beschriebenen Komponenten. Zusätzlich ist ein Teilnehmer-Identifikations-Modul SIM dargestellt, in dem beispielsweise eine Zugangsberechtigung AA gespeichert wird, durch die eine Berechtigung der Mobilstation MS zum Empfang der Programmodule PM seitens des Mobilfunknetzes überprüft werden kann. Zusätzlich kann zur Entschlüsselung der verschlüsselt übertragenen Programmodule PM auf dem Teilnehmer-Identifikations-Modul SIM beispielsweise ein Dekodierungs-Schlüssel DCK gespeichert sein.

Weiterhin ist eine Speicherung der Signalisierungsinformationen SI bzw. Programmodule PM auf dem Teilnehmer-Identifikations-Modul SIM denkbar, so daß die Mobilstation MS ohne den zusätzlichen Empfang dieser Signalisierungsinformationen SI oder der Programmodule PM eine Anpassung an ein Luftschnittstellenzugangsverfahren RIAS generieren kann. Diese Realisierung ist insbesondere für eine Speicherung des in dem Heimatbereich des mobilen Teilnehmers unterstützten Luftschnittstellenzugangsverfahrens RIAS sinnvoll.

## Patentansprüche

1. Verfahren zum Anpassen einer Mobilstation (MS), die sich in einem Funkversorgungsbereich eines Mobilfunknetzes befindet, an ein von diesem Mobilfunknetz unterstütztes Luftschnittstellenzugangsverfahren (RIAS), bei dem
- auf einem Pilotkanal (PICH) Signalisierungsinformationen (SI) über zumindest ein Luftschnittstellenzugangsverfahren (RIAS) des Mobilfunknetzes übertragen werden,
- der Pilotkanal (PICH) von zumindest einer Rundfunksendestation (PBT) eines öffentlichen Rundfunksystems (PBS) in dem Funkversorgungsbereich des Mobilfunknetzes gesendet und von der Mobilstation (MS) empfangen und ausgewertet wird, und
- die Mobilstation (MS) mittels der Signalisierungsinformationen (SI) ein Luftschnittstellenzugangsverfahren (RIAS) auswählt und eine Anpassung an das ausgewählte Luftschnittstellenzugangsverfahren (RIAS) des Mobilfunknetzes generiert.

2. Verfahren nach Anspruch 1,
bei dem die Signalisierungsinformationen (SI) periodisch auf dem Pilotkanal (PICH) übertragen werden.

3. Verfahren nach Anspruch 1 oder 2,
bei dem der Pilotkanal (PICH) gemeinsam mit RDS-Informationen (RDSI) auf zumindest einem Rundfunkübertragungskanal (PBCH) in einem Frequenzspektrum des öffentlichen Rundfunksystems (PBS) gesendet wird und ein als FM-Empfänger (PBR) mit einem darin verwirklichten RDS-Dekoder (RDSD) ausgestalteter Pilotkanalempfänger (PICHR) einen RDS-Informationen (RDSI) führenden Rundfunkübertragungskanal (PBCH) ermittelt und den Pilotkanal (PICH) empfängt.

4. Verfahren nach einem der vorhergehenden Ansprüche,
bei dem ein auf dem Pilotkanal (PICH) übertragener Zeiger (P) auf zumindest einen Breitbandübertragungskanal (BBCH) verweist, auf dem zumindest ein Programmodul (PM) übertragen wird, und die Mobilstation (MS) durch die Programmodule (PM) eine Anpassung an das ausgewählte Luftschnittstellenzugangsverfahren (RIAS) generiert.

5. Verfahren nach Anspruch 4,
bei dem die Programmodule (PM) periodisch auf dem Breitbandübertragungskanal (BBCH) übertragen werden.

6. Verfahren nach einem der Ansprüche 4 oder 5,
bei dem der Breitbandübertragungskanal (BBCH) in einem Frequenzspektrum eines digitalen Rundfunksystems (DABS) von zumindest einer digitalen Rundfunksendestation (DABT) in dem Funkversorgungsbereich des Mobilfunknetzes gesendet wird, und ein in der Mobilstation (MS) verwirklichter, auf das Frequenzspektrum des digitalen Rundfunksystems (DABS) ausgelegter, digitaler Breitbandempfänger (DBBR) die Programmodule (PM) empfängt.

7. Verfahren nach einem der Ansprüche 4 bis 6,
bei dem die Programmodule (PM) periodisch in zumindest einem Datenpaket (DP) auf dem Breitbandübertragungskanal (BBCH) übertragen werden.

8. Verfahren nach Anspruch 7,
bei dem die Datenpakete (DP) in einem in der Mobilstation (MS) verwirklichten Datenpaketspeicher (DPM) gespeichert werden.

9. Verfahren nach Anspruch 7 oder 8,
bei dem jedem Datenpaket (DP) jeweils ein Kopf (H) und eine Rahmen-Check-Summe (FCS) vor- bzw. nachgestellt wird, durch die der erfolgreiche Empfang der für die Anpassung der Mobilstation (MS) an das Luftschnittstellenzugangsverfahren (RIAS) benötigten Programmodule (PM) in der Mobilstation (MS) überprüft wird.

10. Verfahren nach einem der Ansprüche 4 bis 9,
bei dem die Programmodule (PM) verschlüsselt auf dem Breitbandübertragungskanal (BBCH) übertragen werden.

11. Verfahren nach Anspruch 10,
bei dem die verschlüsselte Programmodule (PM) mittels eines in einem Teilnehmer-Identifikations-Modul (SIM) gespeicherten Dekodierungs-Schlüssels (DCK) entschlüsselt werden.

12. Verfahren nach einem der Ansprüche 4 bis 11,
bei dem eine Zugangsberechtigung (AA) zum Empfangen der Programmodule (PM) in einem Teilnehmer-Identifikations-Modul (SIM) gespeichert wird.

13. Verfahren nach einem der vorhergehenden Ansprüche,
bei dem die Signalisierungsinformationen (SI) für die Generierung der Anpassung der Mobilstation (MS) an das Luftschnittstellenzugangsverfahren (RIAS) in einem Teilnehmer-Identifikations-Modul (SIM) gespeichert werden.

14. Verfahren nach einem der Ansprüche 4 bis 13,
bei dem die Programmodule (PM) für die Generierung der Anpassung der Mobilstation (MS) an das Luttschnittstellenzugangsverfahren (RIAS) in einem Teilnehmer-Identifikations-Modul (SIM) gespeichert werden.

15. Mobilstation (MS) zum Anpassen an ein von einem Mobilfunknetz unterstütztes Luftschnittstellenzugangsverfahren (RIAS), mit
- einem Pilotkanalempfänger (PICHR) zum Empfangen eines von zumindest einer Rundfunksendestation (PBT) eines öffentlichen Rundfunksystems (PBS) gesendeten Pilotkanals (PICH) mit Signalisierungsinformationen (SI) über zumindest ein Luftschnittstellenzugangsverfahren (RIAS),
- einer Auswerteeinrichtung (UD) zum Auswerten der auf dem Pilotkanal (PICH) übertragenen Signalisierungsinformationen (SI), zum Auswählen eines Luftschnittstellenzugangsverfahrens (RIAS) und zum Anpassen der Mobilstation (MS) an das ausgewählte Luftschnittstellenzugangsverfahren (RIAS).

16. Mobilstation (MS) nach Anspruch 15,
bei der der Pilotkanalempfänger (PICHR) als FM-Empfänger (PBR) mit einem darin verwirklichten RDS-Dekoder (RDSD) zum Ermitteln eines RDS-Informationen (RDSI) führenden Rundfunkübertragungskanal (PBCH) in einem Frequenzspektrum des öffentlichen Rundfunksystems (PBS) und zum Empfangen des mit den RDS-Informationen (RDSI) gesendeten Pilotkanals (PICH) ausgestaltet ist.

17. Mobilstation (MS) nach Anspruch 15 oder 16,
die eine Adaptationseinrichtung (AD) zum Anpassen der Mobilstation (MS) an das Luftschnittstellenzugangsverfahren (RIAS) durch zumindest ein auf einem Breitbandübertragungskanal (BBCH) übertragenes Programmodul (PM) aufweist.

18. Mobilstation (MS) nach Anspruch 17,
die einen auf das Frequenzspektrum eines digitalen Rundfunksystems (DABS) ausgelegten digitalen Breitbandempfänger (DBBR) zum Ermitteln eines mittels eines auf dem Pilotkanal (PICH) übertragenen Zeigers (P) verwiesenen Breitbandübertragungskanals (BBCH) eines digitalen Rundfunksystems (DABS) und zum Empfangen der auf dem Breitbandübertragungskanal (BBCH) übertragenen Programmodule (PM) aufweist.

19. Mobilstation (MS) nach Anspruch 17 oder 18,
die einen Datenpaketspeicher (DPM) zum Speichern der in zumindest einem Datenpaket (DP) übertragenen Programmodule (PM) aufweist.

20. Mobilstation (MS) nach Anspruch 19,
bei der die Auswerteeinrichtung (UD) Mittel zur Auswertung der Datenpakete (DP) und zur Prüfung des vollständigen Empfangs der Programmodule (PM) mittels den Datenpaketen jeweils vor- bzw. nachgestellten Kopf (H) und Rahmen-Check-Summe (FCS) aufweist.

21. Kommunikationssystem zum Anpassen einer Mobilstation (MS), die sich in einem Funkversorgungsbereich eines Mobilfunknetzes mit einer oder mehreren Basisstationen (BTS) befindet, an ein von diesem Mobilfunknetz unterstütztes Luftschnittstellenzugangsverfahren (RIAS),
- mit zumindest einer Rundfunksendestation (PBT) eines öffentlichen Rundfunksystems (PBS), die in dem Funkversorgungsbereich des Mobilfunknetzes einen Pilotkanal (PICH) mit Signalisierungsinformationen (SI) über zumindest ein Luftschnittstellenzugangsverfahren (RIAS) sendet, und
- bei dem die Mobilstation (MS) mittels der Signalisierungsinformationen (SI) ein Luftschnittstellenzugangsverfahren (RIAS) auswählt und eine Anpassung an das ausgewählte Luftschnittstellenzugangsverfahren (RIAS) des Mobilfunknetzes generiert.

22. Kommunikationssystem nach Anspruch 21, bei dem
- zumindest eine digitale Rundfunksendestation (DABT) eines digitalen Rundfunksystems (DABS) in dem Funkversorgungsbereich des Mobilfunknetzes auf einem mittels eines auf dem Pilotkanal (PICH) übertragenenen Zeigers (P) verwiesenen Breitbandübertragungskanal (BBCH) zumindest ein Programmodul (PM) überträgt, und
- die Mobilstation (MS) durch diese Programmodule (PM) eine Anpassung an das ausgewählte Luftschnittstellenzugangsverfahren (RIAS) generiert.

## Claims

1. Method for adapting a mobile station (MS) which is located in a radio coverage area of a mobile radio network to a radio interface access method (RIAS) that is supported by said mobile radio network, wherein
- signalling information (SI) relating to at least one radio interface access method (RIAS) of the mobile radio network is transmitted on a pilot channel (PICH),
- the pilot channel (PICH) is sent by at least one broadband transmitting station (PBT) of a public broadcasting system (PBS) in the radio coverage area of the mobile radio network and received and evaluated by the mobile station (MS), and
- the mobile station (MS) selects a radio interface access method (RIAS) with the aid of the signalling information (SI) and generates an adaptation to the selected radio interface access method (RIAS) of the mobile radio network.

2. Method according to claim 1,
wherein the signalling information (SI) is transmitted on the pilot channel (PICH) at regular intervals.

3. Method according to claim 1 or 2,
wherein the pilot channel (PICH) is sent together with RDS information (RDSI) on at least one broadcast transmission channel (PBCH) in a frequency spectrum of the public broadcasting system (PBS) and a pilot channel receiver (PICHR) that is embodied as an FM receiver (PBR) having an RDS decoder (RDSD) implemented therein detects a broadcast transmission channel (PBCH) that carries RDS information (RDSI) and receives the pilot channel (PBCH).

4. Method according to one of the preceding claims,
wherein a pointer (P) transmitted on the pilot channel (PICH) points to at least one broadband transmission channel (BBCH) on which at least one program module (PM) is transmitted and the mobile station (MS) generates an adaptation to the selected radio interface access method (RIAS) by means of the program modules (PM).

5. Method according to claim 4,
wherein the program modules (PM) are transmitted on the broadband transmission channel (BBCH) at regular intervals.

6. Method according to one of the claims 4 or 5,
wherein the broadband transmission channel (BBCH) is sent in a frequency spectrum of a digital broadcasting system (DABS) by at least one digital broadcast transmitting station (DABT) in the radio coverage area of the mobile radio network, and a digital broadband receiver (DBBR) implemented in the mobile station (MS) and configured to the frequency spectrum of the digital broadcasting system (DABS) receives the program modules (PM).

7. Method according to one of the claims 4 to 6,
wherein the program modules (PM) are transmitted at regular intervals in at least one data packet (DP) on the broadband transmission channel (BBCH).

8. Method according to claim 7,
wherein the data packets (DP) are stored in a data packet memory (DPM) implemented in the mobile station (MS).

9. Method according to claim 7 or 8,
wherein a header (H) and a frame checksum (FCS) are in each case prefixed and suffixed, respectively, to every data packet (DP) and by means of said header (H) and frame checksum (FCS) a check is made to verify the successful reception of the program modules (PM) that are required for adapting the mobile station (MS) to the radio interface access method (RIAS) in the mobile station (MS).

10. Method according to one of the claims 4 to 9,
wherein the program modules (PM) are transmitted on the broadcast transmission channel (BBCH) in encrypted form.

11. Method according to claim 10,
wherein the encrypted program modules (PM) are decrypted by means of a decoding key (DCK) that is stored in a subscriber identification module (SIM).

12. Method according to one of the claims 4 to 11,
wherein an access authorization (AA) for receiving the program modules (PM) is stored in a subscriber identification module (SIM).

13. Method according to one of the preceding claims,
wherein the signalling information (SI) for generating the adaptation of the mobile station (MS) to the radio interface access method (RIAS) is stored in a subscriber identification module (SIM).

14. Method according to one of the claims 4 to 13,
wherein the program modules (PM) for generating the adaptation of the mobile station (MS) to the radio interface access method (RIAS) are stored in a subscriber identification module (SIM).

15. Mobile station (MS) for adapting to a radio interface access method (RIAS) that is supported by a mobile radio network, comprising
- a pilot channel receiver (PICHR) for receiving a pilot channel (PICH) sent by at least one broadcast transmitting station (PBT) of a public broadcasting system (PBS) and having signalling information (SI) relating to at least one radio interface access method (RIAS),
- an evaluating device (UD) for evaluating the signalling information (SI) transmitted on the pilot channel (PICH) for the purpose of selecting a radio interface access method (RIAS) and adapting the mobile station (MS) to the selected radio interface access method (RIAS).

16. Mobile station (MS) according to claim 15,
wherein the pilot channel receiver (PICHR) is embodied as an FM receiver (PBR) with an RDS decoder implemented therein for detecting a broadcast transmission channel (PBCH) carrying RDS information (RDSI) in a frequency spectrum of the public broadcasting system (PBS) and for receiving the pilot channel (PICH) sent with the RDS information (RDSI).

17. Mobile station (MS) according to claim 15 or 16,
having an adaptation device (AD) for adapting the mobile station (MS) to the radio interface access method (RIAS) by means of at least one program module (PM) transmitted on a broadband transmission channel (BBCH).

18. Mobile station (MS) according to claim 17,
having a digital broadband receiver (DBBR) which is configured to match the frequency spectrum of a digital broadcasting system (DABS) for detecting a broadband transmission channel (BBCH) of a digital broadcasting system (DABS), said broadband transmission channel (BBCH) being indicated by a pointer (P) transmitted on the pilot channel (PICH), and for receiving the program modules (PM) transmitted on the broadband transmission channel (BBCH).

19. Mobile station (MS) according to claim 17 or 18,
having a data packet memory (DPM) for storing the program modules (PM) transmitted in at least one data packet (DP).

20. Mobile station (MS) according to claim 19,
wherein the evaluating device (UD) has means for evaluating the data packets (DP) and for checking the complete reception of the program modules (PM) with the aid of a header (H) and a frame checksum (FCS) prefixed and suffixed, respectively, in each case to the data packets.

21. Communication system for adapting a mobile station (MS) which is located in a radio coverage area of a mobile radio network having one or more base stations (BTS) to a radio interface access method (RIAS) that is supported by said mobile radio network,
- having at least one broadcast transmitting station (PBT) of a public broadcasting system (PBS), said broadcast transmitting station (PBT) sending a pilot channel (PICH) with signalling information (SI) relating to at least one radio interface access method (RIAS) in the radio coverage area of the mobile radio network, and
- wherein the mobile station (MS) selects a radio interface access method (RIAS) with the aid of the signalling information (SI) and generates an adaptation to the selected radio interface access method (RIAS) of the mobile radio network.

22. Communication system according to claim 21, wherein
- at least one digital broadcast transmitting station (DABT) of a digital broadcasting system (DABS) transmits at least one program module (PM) on a broadband transmission channel (BBCH) indicated by mans of a pointer (P) transmitted on the pilot channel (PICH) in the radio coverage area of the mobile radio network, and
- the mobile station (MS) generates an adaptation to the selected radio interface access method (RIAS) by means of said program modules (PM).

## Revendications

1. Procédé pour adapter une station mobile (MS), qui se trouve dans une zone de desserte radio d'un réseau radio mobile, à un procédé d'accès à une interface aérienne (RIAS) assisté par ce réseau radio mobile, dans lequel
- des informations de signalisation (SI) sont transmises sur un canal pilote (PICH) par l'intermédiaire d'au moins un procédé d'accès à une interface aérienne (RIAS) du réseau radio mobile,
- le canal pilote (PICH) est émis par au moins une station de radiodiffusion (PBT) d'un système de radiodiffusion publique (PBS) dans la zone de desserte radio du réseau radio mobile et est reçu et évalué par la station mobile (MS) et
- la station mobile (MS) sélectionne un procédé d'accès à une interface aérienne (RIAS) au moyen des informations de signalisation (SI) et génère une adaptation au procédé d'accès à une interface aérienne (RIAS) sélectionné du réseau radio mobile.

2. Procédé selon la revendication 1,
dans lequel les informations de signalisation (SI) sont transmises périodiquement sur le canal pilote (PICH).

3. Procédé selon la revendication 1 ou 2,
dans lequel le canal pilote (PICH) est émis conjointement avec des informations RDS (RDSI) sur au moins un canal de radiodiffusion (PBCH) dans un spectre de fréquences du système de radiodiffusion publique (PBS) et un récepteur de canal pilote (PICHR) réalisé en tant que récepteur FM (PBR) avec un décodeur RDS (RDSD) réalisé en son sein détermine un canal de radiodiffusion (PBCH) véhiculant des informations RDS (RDSI) et reçoit le canal pilote (PICH).

4. Procédé selon l'une des revendications précédentes,
dans lequel un indicateur (P) transmis sur le canal pilote (PICH) indique au moins un canal de transmission large bande (BBCH) sur lequel est transmis au moins un module de programme (PM) et la station mobile (MS) génère, par les modules de programme (PM), une adaptation au procédé d'accès à une interface aérienne (RIAS) sélectionné.

5. Procédé selon la revendication 4,
dans lequel les modules de programme (PM) sont transmis périodiquement sur le canal de transmission large bande (BBCH).

6. Procédé selon l'une des revendications 4 ou 5,
dans lequel le canal de transmission large bande (BBCH) est émis dans un spectre de fréquences d'un système de radiodiffusion numérique (DABS) par au moins une station de radiodiffusion numérique (DABT) dans la zone de desserte radio du réseau radio mobile et un récepteur large bande numérique (DBBR) réalisé dans la station mobile (MS) et conçu pour le spectre de fréquences du système de radiodiffusion numérique (DABS) reçoit les modules de programme (PM).

7. Procédé selon l'une des revendications 4 à 6,
dans lequel les modules de programme (PM) sont transmis périodiquement dans au moins un paquet de données (DP) sur le canal de transmission large bande (BBCH).

8. Procédé selon la revendication 7,
dans lequel les paquets de données (DP) sont mis en mémoire dans une mémoire de paquets de données (DPM) réalisée dans la station mobile (MS).

9. Procédé selon la revendication 7 ou 8,
dans lequel chaque fois un en-tête (H) et respectivement un total de contrôle de trame (FCS) est antéposé resp. postposé à chaque paquet de données (DP), par lesquels est contrôlée, dans la station mobile (MS), la réception réussie des modules de programme (PM) requis pour l'adaptation de la station mobile (MS) au procédé d'accès à une interface aérienne (RIAS).

10. Procédé selon l'une des revendications 4 à 9,
dans lequel les modules de programme (PM) sont transmis cryptés sur le canal de transmission large bande (BBCH).

11. Procédé selon la revendication 10,
dans lequel les modules de programme (PM) cryptés sont décryptés au moyen d'une clé de décodage (DCK) stockée dans un module d'identification d'abonné (SIM).

12. Procédé selon l'une des revendications 4 à 11,
dans lequel une autorisation d'accès (AA) est mise en mémoire dans un module d'identification d'abonné (SIM) pour recevoir les modules de programme (PM).

13. Procédé selon l'une des revendications précédentes,
dans lequel les informations de signalisation (SI) sont mises en mémoire dans un module d'identification d'abonné (SIM) pour générer l'adaptation de la station mobile (MS) au procédé d'accès à une interface aérienne (RIAS).

14. Procédé selon l'une des revendications 4 à 13,
dans lequel les modules de programme (PM) sont mis en mémoire dans un module d'identification d'abonné (SIM) pour générer l'adaptation de la station mobile (MS) au procédé d'accès à une interface aérienne (RIAS).

15. Station mobile (MS) pour l'adaptation à un procédé d'accès à une interface aérienne (RIAS) assisté par un réseau radio mobile, comprenant
- un récepteur de canal pilote (PICHR) pour recevoir, par l'intermédiaire d'au moins un procédé d'accès à une interface aérienne (RIAS), un canal pilote (PICH) avec des informations de signalisation (SI), émis par au moins une station de radiodiffusion (PBT) d'un système de radiodiffusion publique (PBS),
- un dispositif d'évaluation (UD) pour évaluer les informations de signalisation (SI) transmises sur le canal pilote (PICH), pour sélectionner un procédé d'accès à une interface aérienne (RIAS) et pour adapter la station mobile (MS) au procédé d'accès à une interface aérienne (RIAS) sélectionné.

16. Station mobile (MS) selon la revendication 15,
dans laquelle le récepteur de canal pilote (PICHR) est réalisé en tant que récepteur FM (PBR) avec un décodeur RDS (RDSD) réalisé en son sein pour déterminer, dans un spectre de fréquences du système de radiodiffusion publique (PBS), un canal de radiodiffusion (PBCH) véhiculant des informations RDS (RDSI) et pour recevoir le canal pilote (PICH) émis avec les informations RDS (RDSI).

17. Station mobile (MS) selon la revendication 15 ou 16,
laquelle comporte un dispositif d'adaptation (AD) pour adapter la station mobile (MS) au procédé d'accès à une interface aérienne (RIAS) par au moins un module de programme (PM) transmis sur un canal de transmission large bande (BBCH).

18. Station mobile (MS) selon la revendication 17,
laquelle comporte un récepteur large bande numérique (DBBR), conçu pour le spectre de fréquences d'un système de radiodiffusion numérique (DABS), pour déterminer un canal de transmission large bande (BBCH) d'un système de radiodiffusion numérique (DABS) indiqué au moyen d'un indicateur (P) transmis sur le canal pilote (PICH) et pour recevoir les modules de programme (PM) transmis sur le canal de transmission large bande (BBCH).

19. Station mobile (MS) selon la revendication 17 ou 18,
laquelle comporte une mémoire de paquets de données (DPM) pour enregistrer les modules de programme (PM) transmis dans au moins un paquet de données (DP).

20. Station mobile (MS) selon la revendication 19,
dans laquelle le dispositif d'évaluation (UD) comporte des moyens d'évaluation des paquets de données (DP) et de contrôle de la réception complète des modules de programme (PM) au moyen de l'en-tête (H) et du total de contrôle de trame (FCS) antéposé resp. postposé à chaque paquet de données.

21. Système de communication pour adapter une station mobile (MS), qui se trouve dans une zone de desserte radio d'un réseau radio mobile avec une ou plusieurs stations de base (BTS), à un procédé d'accès à une interface aérienne (RIAS) assisté par ce réseau radio mobile,
- comprenant au moins une station de radiodiffusion (PBT) d'un système de radiodiffusion publique (PBS), laquelle émet dans la zone de desserte radio du réseau radio mobile un canal pilote (PICH) avec des informations de signalisation (SI) par l'intermédiaire d'au moins un procédé d'accès à une interface aérienne (RIAS) et
- dans lequel la station mobile (MS) sélectionne un procédé d'accès à une interface aérienne (RIAS) au moyen des informations de signalisation (SI) et génère une adaptation au procédé d'accès à une interface aérienne (RIAS) sélectionné du réseau radio mobile.

22. Système de communication selon la revendication 21, dans lequel
- au moins une station de radiodiffusion numérique (DABT) d'un système de radiodiffusion numérique (DABS) transmet au moins un module de programme (PM) dans la zone de desserte radio du réseau radio mobile sur un canal de transmission large bande (BBCH) indiqué au moyen d'un indicateur (P) transmis sur le canal pilote (PICH) et
- la station mobile (MS) génère par ces modules de programme (PM) une adaptation au procédé d'accès à une interface aérienne (RIAS) sélectionné.
